# EUROPÄISCHE PATENTSCHRIFT

(11) **EP 0 454 961 B1**
(45) Veröffentlichungstag und Bekanntmachung des Hinweises auf die Patenterteilung: **29.11.1995**
(21) Anmeldenummer: 91102863.7
(22) Anmeldetag: 27.02.1991
(51) Int. Cl.: H02B 13/035, H02B 13/075

(54) **Gasisolierte Schaltanlage für den Einsatz in Netzverteilerstationen**
Gas insulated switchgear for use in transformer distribution station
Installation de commutation à gaz isolant utilisé dans des stations de distribution

(30) Priorität: 09.04.1990 DE 4011397
(43) Veröffentlichungstag der Anmeldung: 06.11.1991
(73) Patentinhaber: Felten & Guilleaume Energietechnik AG, D-51058 Köln (DE)
(72) Erfinder: Mooz, Dietrich, W-4150 Krefeld (DE); Dirks, Rolf, W-4156 Willich 4 (DE); Deharde, Horst, W-4156 Kempen 1 (DE)

(56) Entgegenhaltungen:
- EP-A- 0 093 225
- DE-A- 3 421 265
- DE-A- 3 513 499
- DE-U- 1 907 464
- DE-U- 1 989 911
- DE-U- 9 004 086
- US-A- 3 459 905

## Beschreibung

Die Erfindung betrifft eine gasisolierte Schaltanlage für den Einsatz in Netzverteilerstationen gemäß dem Oberbegriff des Anspruchs 1.

Die Entwicklung in der Vergangenheit hat gezeigt, daß sich gasisolierte Schaltanlagen mit Lasttrennschaltern in den Netzverteilerstationen immer mehr durchsetzen. Das Prinzip, nämlich die Gasisolierung mit SF₆ wird seit etwa 25 Jahren in der Hochspannungsanlagentechnik verwendet. Da der Wunsch nach kleinen und gleichzeitig zuverlässigen Lasttrennschalteranlagen immer größer wurde, war der nächste Schritt bei diesen Anlagen die Einführung der Gasisolierung SF₆. Mit diesem Isoliergas konnten nunmehr Anlagen mit kleineren Abmessungen als bisher realisiert werden. Hierbei sorgt eine dichte und druckfeste Kapselung für eine gleichbleibende Menge und Qualität des Isoliergases.

Aus der DE-OS 38 20 489 ist eine SF₆-gasisolierte Lasttrennschalteranordnung bekannt, bei der die Lasttrennschalter in einem gekapselten, mit Schwefelhexaflourid (SF₆) gefüllten Gehäuse (Gastank) angeordnet sind, je Phase ein festes und ein bewegliches Kontaktstück, einen Erdungskontakt, und eine aus Löschblechen bestehende Löscheinrichtung aufweisen, und bei der die festen Kontaktstücke gleicher Phasen direkt auf einer Sammelschiene befestigt und die Löscheinrichtungen jeweils neben diesen direkt auf der Sammelschiene angeordnet sind.

Es besteht nun aber die Tendenz, wegen des knappen und teuren Raums in den Städten die gasisolierten Mittelspannungsschaltanlagen weiterhin zu verkleinern. Bei immer kleiner werdenden Abmessungen derartiger Anlagen wird der Einbau der einzelnen Teile in die Gastanks jedoch erheblich erschwert. Hier will die Erfindung Abhilfe schaffen. Die Erfindung, wie sie in den Ansprüchen gekennzeichnet ist, löst die Aufgabe, eine gasisolierte Schaltanlage gegenüber dem Stand der Technik weiter zu verkleinern und montagemäßig freundlicher zu gestalten.

Diese Aufgabe wird erfindungsgemäß durch die im Kennzeichen des Anspruchs 1 angegebene Kombinaton von konstruktiven Merkmalen gelöst.

Die mit der Erfindung erzielten Vorteile liegen insbesondere darin, daß wichtige Teile der Lasttrennschalter in einer vorgefertigten Baugruppe zusammengefaßt werden können und daß diese Baugruppe dann in den zunächst an der Rückseite offenen Gastank einfach eingeschoben wird. Auch können die Erdungskontakte durch die Befestigung an jeder Schalterwelle in einfacher Weise montiert werden. Anschließend wir der Gastank an der Rückseite gasdicht verschlossen.

Vorteilhafte Aus-und Weiterbildungen des Gegenstandes nach Anspruch 1 sind den Unteransprüchen zu entnehmen.

Ein Ausführungsbeispiel der Erfindung ist in Zeichnungen dargestellt und wird im folgenden näher erläutert. Es zeigen
- Fig. 1: eine gasisolierte Schaltanlage in Draufsicht
- Fig. 2: diese Anlage in seitlicher Ansicht
- Fig. 3: diese Anlage in einer Teilansicht von hinten zur Vorderseite.

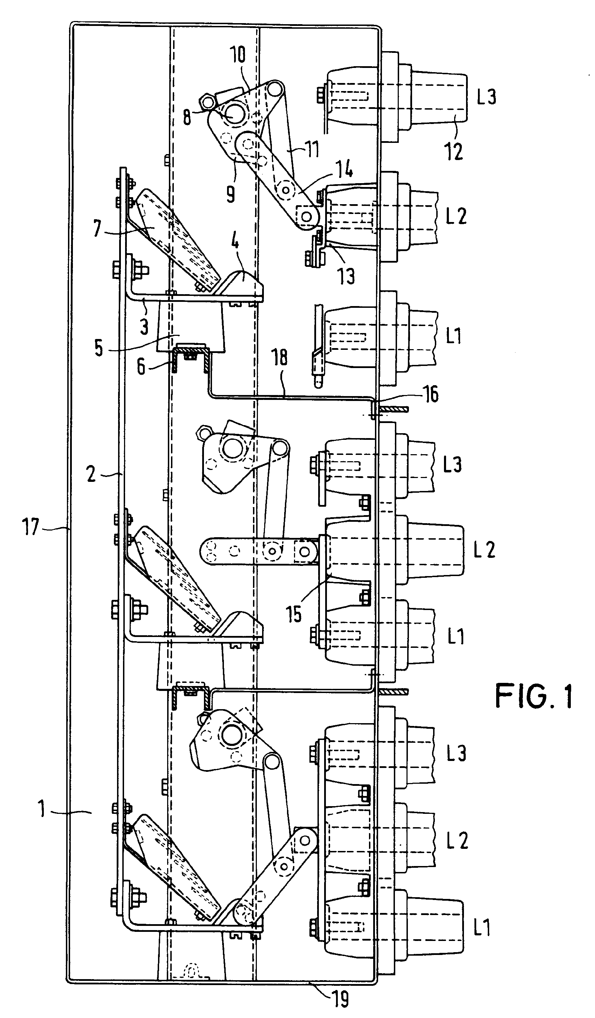

Nach Fig. 1 besteht die gasisolierte Schaltanlage aus einem Gastank **1**, der mit drei dreipoligen Lasttrennschaltern bestückt ist. Diese Lasttrennschalter besitzen Schaltmesser **14**, die als Doppeltrennmesser ausgebildet sind. Für die Phase L 2 ruhen die Schaltmesser **14** jeweils auf Durchführungen **12**, für die Phasen L 1 und L 3 sind besondere Schaltmesserstützer **13** eingesetzt, die mit den zugehörigen Durchführungen 12 durch Lagerstücke 15 verbunden sind. Die Durchführungen 12 befinden sich sämtlich an der Vorderseite 16 des vierseitig prismatischen Gastanks 1. Die Betätigung der Schaltmesser 14 erfolgt über eine Schalterwelle 8, die über einen Hebel 10 und eine Koppelstange 11 mit dem Schaltmesser 14 verbunden ist. Die Schaltmesser 14 können drei Stellungen einnehmen. Im eingeschalteten Zustand kontaktiert das Schaltmesser 14 einen Sammelschienenkontakt 4. Der Einschaltzustand ist im unteren Schaltfeld dargestellt. Im ausgeschalteten Zustand wird das Schaltmesser 14 in eine Position gebracht, die zwischen dem Sammelschienenkontakt 4 und einem Erdungskontakt 9, der direkt mit der Schalterwelle 8 verbunden ist, liegt. Dieser Schaltzustand ist im mittleren Schaltfeld dargestellt. Im geerdeten Zustand (oberes Schaltfeld) kontaktiert das Schaltmesser 14 den zuvor erwähnten Erdungskontakt 9.

Im Gastank 1 befindet sich ferner eine Sammelschiene 2 für jede Phase. Jede dieser Sammelschienen 2 trägt drei Löschkammern 7, die direkt mit der Sammelschiene 2 verschraubt sind. Die bereits erwähnten Sammelschienenkontakte 4 sind auf Querträgern 3 montiert, die gleichfalls mit der Sammelschiene 2 verschraubt sind.

Für jeden Querträger 3 ist ein Sammelschienenstützer 5 vorgesehen. Während einer der Sammelschienenstützer 5 direkt mit einer Seitenwand 19 des Gastanks 1 verbunden ist, sind die übrigen Sammelschienenstützer 5 auf Haltevorrichtungen 6 angebracht, die wiederum mit Streben 18 an der Vorderseite 16 des Gastanks 1 befestigt sind.

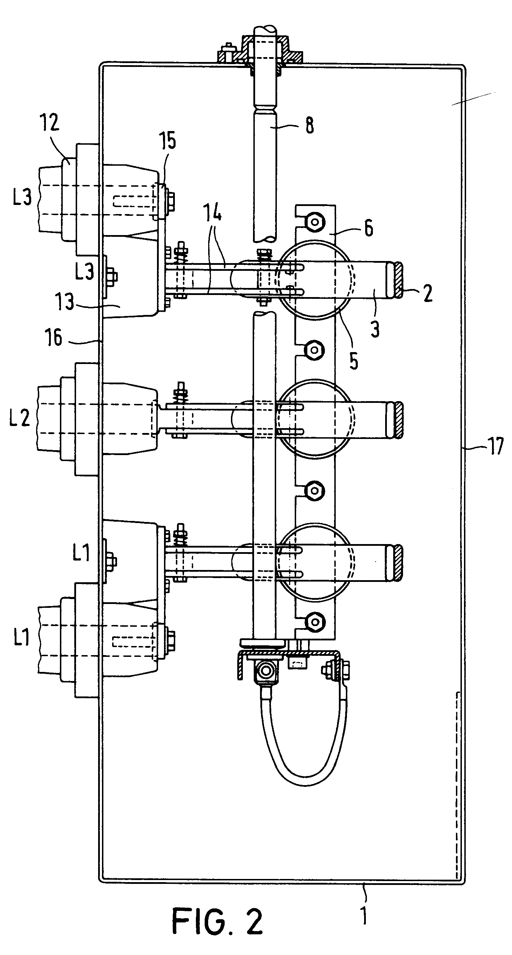

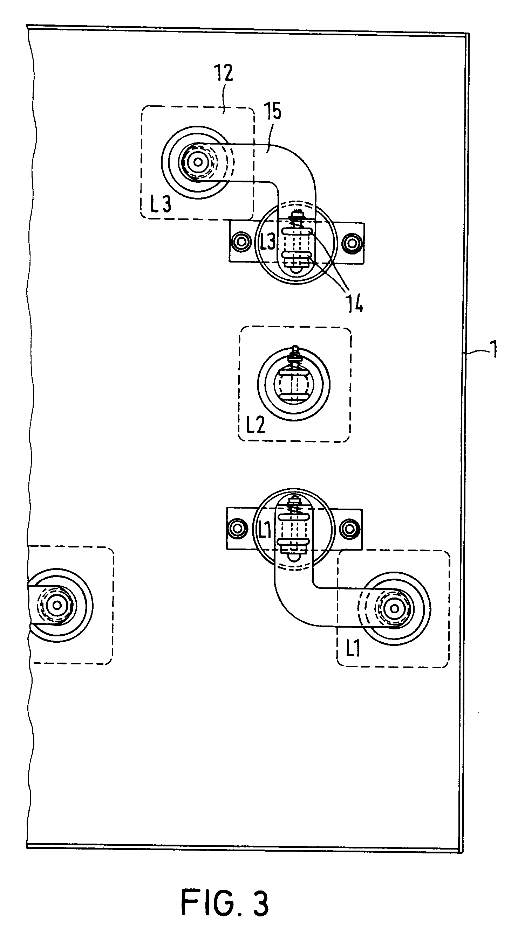

In Fig. 2 sind die drei Phasen L1, L2 und L3 eines Lasttrennschalters dargestellt. Die nach oben herausgeführte Schalterwelle 8 dient der Betätigung der einzelnen Schaltmesser 14. Die Sammelschienen 2 sind jeweils für eine Phase vorgesehen, so daß in der Fig. 2 drei Sammelschienen 2 ersichtlich sind. Was nun die Lagerstücke 15 betrifft, so sind diese für die Phasen L 1 und L 3 erforderlich. Die Durchführungen 12 sind in der Vorderseite 16 diagonal angeordnet, während die Drehpunkte der Schaltmesser 14 in einer Ebene liegen. Aus diesem Grunde sind die Lagerstücke 15 rechtwinklig ausgebildet, was besonders der Fig. 3 zu entnehmen ist.

## Patentansprüche

1. Gasisolierte Schaltanlage für den Einsatz in Netzverteilerstationen, mit einem im wesentlichen vierseitig prismatischen Gastank (1) für mehrere Schaltfelder, die jeweils mit einem dreipoligen Lasttrennschalter und einer Erdungsvorrichtung bestückt sind, mit für den Anschluß von Kabeln und /oder Sicherungen geeigneten Durchführungen (12) und mit Schalterwellen (8), die beide in Öffnungen der Längsseiten des Gastanks (1) eingesetzt sind, und mit Sammelschienen (2) für die festen Kontakte (4) der Phasen L1, L2 und L3 und direkt mit den Sammelschienen (2) verbundenen Löschkammern (7) für die einzelnen Kontakte (4), **dadurch gekennzeichnet**, daß die festen Kontakte (4) jeweils auf einem mit der Sammelschiene (2) verbundenen Querträger (3) befestigt sind, daß jeder Querträger (3) auf einem mit dem Gastank (1) verbundenen Stützer (5) ruht, daß die Sammelschienen (2) mit den Querträgern (3), den Kontakten (4), den Stützern (5) und Haltevorrichtungen (6) zu einer in den an der Rückseite (17) zunächst offenen Gastank (1) einschiebbaren, vorgefertigten Baugruppe zusammenfügbar sind und daß die drei zur jeweiligen Erdungsvorrichtung gehörenden Erdungskontakte (9) an der Schalterwelle (8) befestigt sind."

2. Schaltanlage nach Anspruch 1, **dadurch gekennzeichnet**, daß die Lasttrennschalter mit Schaltmessern (14) ausgebildet sind, die für die Phase L2 unmittelbar auf den Durchführungen (12) und für die Phasen L1 und L3 auf Stützern (13) befestigt sind, die mit Lagerstücken (15) mit den zugehörigen Durchführungen (12) verbunden sind.

3. Schaltanlage nach Anspruch 2, **dadurch gekennzeichnet**, daß der jeweilige Erdungskontakt (9) an der jeweiligen Schalterwelle (8) derart angeordnet ist, daß der Erdungskontakt (9) bei Betätigung der Schalterwelle (8) in die "Geerdet"-Position mit dem Schaltmesser (14) in Eingriff kommt.

4. Schaltanlage nach einem der Ansprüche 2 oder 3, **dadurch gekennzeichnet**, daß jede Schalterwelle (8) drei Hebel (10) aufweist, von denen jeder sowohl mit dem Erdungskontakt (9) versehen als auch mit einer Koppelstange (11) des Schaltmessers (14) verbunden ist.

5. Schaltanlage nach einem der Ansprüche 1 bis 4, **dadurch gekennzeichnet**, daß die Haltevorrichtungen (6) der Sammelschienenstützer (5) mit der Vorderseite (16) des Gastanks (1) über Streben (18) verbunden sind.

6. Schaltanlage nach einem der Ansprüche 2 bis 4 oder nach Anspruch 5, **dadurch gekennzeichnet**, daß die Lagerstücke (15) aus rechtwinklig geformten Flachteilen bestehen.

## Claims

1. A gas-insulated switching installation for use in power distribution stations, comprising a substantially quadrilaterally prismatic gas tank (1) for a plurality of switching fields each provided with a triple-pole load-break switch and an earthing device, comprising bushings (12), suitable for the connection of cables and/or fuses, and switch shafts (8), both being inserted into openings in the longitudinal sides of the gas tank (1), and comprising busbars (2) for the fixed contacts (4) of the phases L1, L2 and L3, and quenching chambers (7) for the individual contacts (4), the said quenching chambers (7) being directly connected to the busbars (2), characterised in that the fixed contacts (4) are each fixed to a crosspiece (3) connected to the busbar (2), in that each crosspiece (3) rests on a supporting insulator (5) connected to the gas tank (1), in that the busbars (2) can be combined with the crosspieces (3), the contacts (4), the supporting insulators (5) and holding devices (6) to form a prefabricated sub-assembly insertable into the gas tank (1) initially open at the rear (17), and in that the three earthing contacts (9) associated with the respective earthing device are fixed to the switch shaft (8).

2. A switching installation according to claim 1, characterised in that the load-break switches are formed with switch blades (14) fixed directly to the bushings (12) for the phase L2 and fixed to supporting insulators (13) for the phases L1 and L3, the said supporting insulators (13) being connected to the associated bushings (12) by support members (15).

3. A switching installation according to claim 2, characterised in that the respective earthing contact (9) is arranged on the respective switch shaft (8) in such a manner that the earthing contact (9) comes into engagement with the switch blade (14) when the switch shaft (8) is moved into the "earthed" position.

4. A switching installation according to one of claims 2 or 3, characterised in that each switch shaft (8) has three levers (10), each of which is provided with the earthing contact (9) and connected to a coupling rod (11) of the switch blade (14).

5. A switching installation according to one of claims 1 to 4, characterised in that the holding devices (6) of the busbar supporting insulators (5) are connected to the front (16) of the gas tank (1) by struts (18).

6. A switching installation according to one of claims 2 to 4 or 5 characterised in that the support members (15) comprise right-angled flat parts.

## Revendications

1. Installation de commutation à gaz isolant, destinée à des stations de distribution du réseau, comportant un réservoir à gaz (1), prismatique, essentiellement à quatre côtés, pour plusieurs champs de commutation, équipés chacun d'un disjoncteur de puissance, tripolaire, et d'un dispositif de mise à la masse avec des organes de passage (12) appropriés pour le branchement de câbles et/ou de fusibles et des axes de commutation (8), ces moyens étant logés dans des ouvertures des côtés allongés du réservoir à gaz (1), des rails collecteurs (2) pour les contacts fixes (4) des phases (L1, L2, L3) et des chambres d'extinction (7) reliées directement aux rails collecteurs (2) pour les différents contacts (4), caractérisée en ce que les contacts fixes (4) sont montés solidairement sur un support transversal (3) solidaire des rails collecteurs (2) et chaque support transversal (3) repose sur un appui (5) relié au réservoir à gaz (1), les rails collecteurs (2) avec les supports transversaux (3), les contacts (4), les appuis (5) et les dispositifs de fixation (6) étant assemblés sous la forme d'un ensemble préfabriqué qui se glisse par la face arrière (17) du réservoir à gaz (1) tout d'abord ouvert et en ce que les trois contacts de masse (9) appartenant aux dispositifs de mise à la masse, respectifs, sont fixés à l'axe de commutation (8).

2. Installation de commutation selon la revendication 1, caractérisée en ce que les disjoncteurs comportent des couteaux de contact (14) qui, pour la phase (L2), sont fixés directement sur les organes passage (12) et dans le cas des phases (L1) et (L3) sur les appuis (5) reliés aux pièces d'appui (15) des organes de passage (12) correspondants.

3. Installation de commutation selon la revendication 2, caractérisée en ce que le contact de mise à la masse (9) respectif est monté sur l'axe de commutation (8) respectif, le contact de mise à la masse (9) vient en prise avec le couteau de coupure (14) lors de la manoeuvre de l'axe de commutation (8) commandé en position de mise à la masse.

4. Installation de commutation selon l'une des revendications 2 ou 3, caractérisée en ce que chaque axe de commutation (8) comporte trois leviers (10) dont chacun est relié à la fois au contact de mise à la masse (9) et à la bielle (11) du couteau de contact (14).

5. Installation de commutation selon l'une des revendications 1 à 4, caractérisée en ce que les dispositifs de support (6) des organes d'appui (5) des rails collecteurs sont reliés à la face avant (16) du réservoir à gaz (1) par l'intermédiaire d'entretoises (18).

6. Installaticn de commutation selon l'une des revendications 2 à 4 ou 5, caractérisée en ce que les pièces de support (15) sont des pièces plates, pliées à l'équerre.
